# EUROPEAN PATENT APPLICATION

(11) **EP 4 787 781 A1**
(43) Date of publication of application: **05.08.2026**
(21) Application number: 25155223.8
(22) Date of filing: 31.01.2025
(51) Int. Cl.: H04L 12/10, H04L 12/12, H04L 12/46, H04L 49/113, H04L 49/15, H04L 49/35, H04L 49/40, H04L 49/552, H04L 67/12

(54) **REDUNDANT SWITCH FOR ETHERNET NETWORK**

(71) Applicant: ABB SCHWEIZ AG, 5400 Baden (CH)
(72) Inventor: BOLLMEYER, Stefan, 32425 Minden (DE); JESKE, Ralf, 32469 Petershagen (DE); KEUL, Thomas, 63579 Freigericht (DE); GROSSE, Holger, 32427 Minden (DE); MERLIN, Tilo, 63589 Linsengericht (DE)
(74) Representative: Maiwald GmbH

(57) **Abstract**

A redundant network switch (2) for an Ethernet network (1), comprising:
• at least a first uplink port (3a) and a second uplink port (3b) that are connectable to an Ethernet network (1);
• a plurality of downlink ports (4a-4j) that are connectable to end devices (5a-5g), so as to provide these end devices (5a-5g) with connectivity to the Ethernet network (1); and
• at least a first switching component (6a) connected at least to the first uplink port (3a) and a second switching component (6b) connected at least to the second uplink port (3b), wherein each downlink port (4a-4j) is connected to at least one of the first switching component (6a) and the second switching component (6b),
wherein each of the first switching component (6a) and the second switching component (6b) is configured to, upon receiving an Ethernet frame from an uplink port (3a, 3b) or from a downlink port (4a-4j), forward this Ethernet frame to an uplink port (3a, 3b) or downlink port (4a-4j) that leads towards the destination of this Ethernet frame.

## Description

### FIELD OF THE INVENTION

The invention relates to a switch for an Ethernet network, in particular for use in industrial plant, with internal redundancy to mitigate failure of components.

### BACKGROUND

An industrial plant comprises a plurality of field devices. The field devices comprise, inter alia, sensors that gather measurement data, and actuators that exert some physical action on the industrial process when instructed to do so by a controller. A distributed control system, DCS, has one or more controllers that take measurement data from the sensors as input and then decide which set-point values or other commands to send to which of the actuators.

This back-and-forth communication within the industrial plant requires a network via which the sensors and the actuators are connected with the one or more controllers. Previously, special types of networks for industrial purposes were used, such as the 4-20 mA current loop or HART. The sensors and actuators were connected to I/O cards of controllers. There is a desire to replace these networks with standard Ethernet networks because this provides a number of benefits. For example, Ethernet allows for a much higher communication bandwidth, the use of standard IP-based communication protocols, and thus a much easier integration with IT applications. In an Ethernet network, end devices are typically connected to switches in a star topology. The switches are interconnected by a backbone network.

The downside of Ethernet in star topology is that the switches are single points of failure. Each end device is connected to only one switch. If one switch fails, a larger number (e.g., 8, 16, 24 or even 32) of devices lose connectivity at once, so that they become unavailable for process control. This may lead to critical process states or even safety risks.

### OBJECTIVE OF THE INVENTION

It is therefore an objective of the invention to improve the reliability of a network switch for an Ethernet network, so that a total loss of connectivity of all connected end devices in case of a component failure in the switch is made less probable.

This objective is achieved by a redundant network switch according to a first independent claim and a connection device for mediating a connection between this redundant network switch and at least one end device according to a second independent claim. Further advantageous embodiments are detailed in the respective dependent claims.

### DISCLOSURE OF THE INVENTION

The invention provides a redundant network switch for an Ethernet network. This redundant network switch has at least a first uplink port and a second uplink port that are connectable to an Ethernet network. In particular, this Ethernet network may be a backbone network that interconnects a plurality of switches and also connects them to the outside world, such as a larger network of an industrial plant, or even the Internet. For example, this larger network may comprise higher-level controllers of a DCS that compute set-points for lower-level controllers or make other control decisions for directing the operation of an industrial plant.

The redundant network switch has a plurality of downlink ports that are connectable to end devices, so as to provide these end devices with connectivity to the Ethernet network. For example, these end devices may comprise sensors and/or actuators that are configured for physical interaction with an industrial process that is being executed on the industrial plant.

The redundant network switch comprises at least a first switching component and a second switching component. The first switching component is connected at least to the first uplink port. The second switching component is connected at least to the second uplink port. Each downlink port is connected to at least one of the first switching component or the second switching component. In particular, the first and second switching components may be implemented as first and second switching chips. Each of the first switching component and the second switching component is configured to, upon receiving an Ethernet frame from an uplink port or from a downlink port, forward this Ethernet frame to an uplink port or downlink port that leads towards the destination of this Ethernet frame. In particular, as it is customary in Ethernet networks, the switching component may store, in a MAC address table, which destination (specified by its MAC address) is connected to which port.

In this manner, the failure of any one component will no longer affect all connected end devices at once. If one switching component fails, at worst, only the end devices that are connected to this switching component may lose connectivity. Moreover, one end device may be connected to at least two downlink ports of the redundant network switch, namely one downlink port that is connected to the first switching component and one downlink port that is connected to the second switching component. If one of the switching components fails, the end device will then still have connectivity via the other switching component. An end device equipped with two Ethernet ports may support such a redundancy scheme by connecting to the different downlink ports of the respective switching components.

To support an end device which has only one single Ethernet port, the invention foresees the means of a connection device and a procedure that mediates the connection between the redundant network switch and at least one end device. This connection device is also provided by the present invention and will be described later.

By having the capability of providing at least one port per switching component to the Ethernet backbone network, the novel redundant network switch is capable of supporting different network redundancy protocols, like Media Redundancy Protocol, MRP, Parallel Redundancy Protocol, PRP, or High-availability Seamless Redundancy, HSR.

Alternative, known mitigations to the availability problem of a switch being a single point of failure comprise the deployment of completely redundant networks (e.g. PRP protocol) or ring networks (e.g. MRP, HSR), compare e.g. IEC 62439-3. This requires a lot more hardware than including the redundancy in the redundant Ethernet switch proposed here.

In a particularly advantageous embodiment, the redundant network switch further comprises a redundancy link that interlinks the first switching component and the second switching component. In this manner, if one of the switching components loses its connectivity to the Ethernet backbone network via the uplink port to which it is connected, it may forward traffic to a destination on the Ethernet network via the redundancy link and the other switching component. For example, this covers situations where the Ethernet transceiver associated with one uplink port dies.

The redundancy link may be a network link to which a port of both switching components is connected, respectively. In such an embodiment the redundancy link can also transmit regular network traffic, e.g. to close a loop, e.g. for an MRP ring between the first and second switching component, but also to transmit proprietary messages between the switching components to manage the redundancy. In another embodiment, the redundancy link may be a dedicated electrical, or optical, or RF connection through which both switching components are connected. The redundancy link can also be implemented as combination of network link and dedicated electrical, or optical, or RF connection. In a specific embodiment of the invention, one or more MCU or CPU may be deployed in the redundancy link or in parallel to the redundancy link connected to both switching components and optionally to the connection devices in order to implement the redundancy management functionality and/or additional monitoring, diagnostics and management functionality.

That is, in a further particularly advantageous embodiment, the redundant network switch further comprises a management entity that is connected to both the first switching component and the second switching component. This management entity may implement the redundancy management functionality and/or additional monitoring, diagnostics and management functionality. For example, the management entity may be an Ethernet microcontroller, MCU, or a central processing unit, CPU. In particular, the management entity may be configured to suppress double forwarding of one and the same Ethernet frame by both the first switching component and the second switching component. A redundancy management algorithm implemented by the management entity at least ensures that a telegram received from a redundant channel, which reaches both the first switching component and the second switching component, is not duplicated on the backbone network and that a telegram from the backbone network is only once transmitted to the connected end device (field device).

The redundancy management algorithm may be implemented in a distributed fashion on the switching chips, or optionally centrally in the MCU/CPU, or in a combination between switching chips and MCU/CPU.

In a potential embodiment the redundancy management algorithm is designed to influence the behaviour of the ports of the first switching component and the second switching component to avoid traffic duplication. A specific embodiment foresees this to be a configuration to create a collision domain for the ports of the first switching component and the second switching component connected to the same connection device. In other example embodiment, the configuration of the switch ports foresees to block the forwarding in the uplink and/or downlink of one switching components depending on the health status of the other switching components. In another more elaborated example embodiment of the redundancy management algorithm the forwarding decision is taken based on paket inspection mechanisms to only selectively block certain types of messages. In a preferred embodiment of the redundancy management algorithm, it decides upon the port behavior based on an automatic detection of the type of connection device connected to the respective ports. In a particular efficient embodiment of the redundancy management algorithm the forwarding decision is taken on the uplink port of the switching component.

In a further particularly advantageous embodiment, at least a first downlink port connected to the first switching component is arranged side by side with at least a second downlink port connected to the second switching component. That is, sockets corresponding to these downlink ports may be arranged side by side on a front panel, on a backplane or in another place that is assigned for the connection of end devices. In this manner, a redundant connection of the switch to a connection device that mediates a connection between the redundant network switch and an end device may be achieved by plugging the connection device into both the first downlink port and the second downlink port. In particular, for connecting each end device, the user may be given a choice whether to use a connection device that connects to only one downlink port of the redundant network switch, or a connection device that connects to two downlink ports of the redundant network switch. In a typical DCS, not all end devices are equally crucial for the functioning of the DCS as a whole. If a particular end device is less crucial for the functioning of the DCS as a whole, non-redundant connectivity to the Ethernet network may suffice. In this manner, the total number of required downlink ports may be reduced, and the associated cost may be saved. The modular design allows to decide, on a port-by-port basis, whether any particular end device shall have a single connection or a redundant connection to the Ethernet network, and optionally also how much voltage or electrical power should be provided to it.

In a further particularly advantageous embodiment, the first switching component and the second switching component are mounted in modules that are detachable from the redundant network switch. The redundant network switch is configured to allow replacing such modules during operation of the redundant network switch. In this manner, in the event that one of the switching components is faulty, the redundant network switch may be restored to full functionality without having to shut it down altogether temporarily.

The invention also provides a connection device for mediating a connection between the redundant network switch described above on the one hand, and at least one end device on the other hand. This connection device comprises at least one uplink port that is connectable to a downlink port of the redundant network switch, as well as at least one downlink port that is connectable to the at least one end device. The uplink ports are not required to adhere to the Ethernet standard. Rather, they may be of an internal format that is only understood by the redundant Ethernet switch on the one hand, and the connection device on the other hand.

In particular, the at least one end device may reside in an Ethernet network that may optionally comprise other participants. Optionally, in a particularly advantageous embodiment, the connection device may be further configured to pass on electrical power from the redundant network switch to the end device via the at least one downlink port.

In this manner, it is made much easier to provide different end devices with different power levels. Just providing every end device with the maximum amount of power that might be needed is not a solution if end devices are in a potentially explosive atmosphere. Requirements for "intrinsic safety" dictate that only a certain maximum voltage, and/or a certain maximum electrical power, that is not sufficient for an ignition may be present on the end device. That is, the power that is available according to the conventional "Power over Ethernet" standard is usually too much for such a hazardous area, and needs to be reduced by the connection device. A modular configuration with one redundant network switch and pluggable connection devices allows to flexibly configure different end devices with different power levels, on top of different levels of redundant connectivity.

Optionally, the connection device may also implement a surge protection towards the Ethernet network. That is, the connection device may comprise one or more components that ground and/or absorb any voltage surges that come in from the Ethernet network, so as to keep these voltage surges from reaching the end device. The Ethernet network typically covers long distances on the site, so the cabling of the Ethernet network is prone to picking up, e.g., voltage surges resulting from nearby lightning strikes. Another source of voltage surges is that the Ethernet network may interconnect different buildings that are at different ground potentials. Components that ground the voltage surges may, for example, comprise Z-diodes that become conductive if the voltage passes a certain amount, or a gas discharge tube that shorts out an overvoltage. The component may also absorb the energy provided by the overvoltage in the sense that it is destroyed after a sufficiently high voltage surge. In particular, in this case, it is advantageous to have the surge protection in the connection device because this can be easily replaced, and a failed connection device affects only one single end device.

The connection of the connection device to the redundant network switch may, for example, be implemented as a media independent interface, such as MMI or RMII or RGMII. In another example, the 10BASE-T1 L PHY may be implemented close to the port of the switching components, so that the Power Supply Module only needs to add the power supply aspect towards the connection to the end device (field device). Also different other internal interface technologies, e.g. based on SPI, are possible depending on the most efficient implementation of the voting, or routing, or coupling functionality implemented on redundant connection devices.

In a particularly advantageous embodiment, the connection device comprises at least two uplink ports that are connectable to downlink ports of the redundant network switch. The connection device may further comprise a de-coupling element that allows the passing and/or forwarding of Ethernet frames from the uplink ports to the downlink port and vice versa without creating a direct electrical connection between data contacts of the two uplink ports. Preferably, the at least two uplink ports of the connection device are connectable to the respective downlink ports of the redundant network switch by plugging the connection device to the redundant network switch. In this manner, the end device may be provided with redundant connectivity via the first and second switching components. That is, if the one switching component fails, the end device still has connectivity via the other switching component. The absence of a direct electrical connection between data contacts of the two uplink ports ensures that a failed switching component will not be able to drag the uplink port of the other switching component down with it. As an alternative, the galvanic isolation may also be implemented on the "switch-side" of the internal interface.

In a further particularly advantageous embodiment, the connection device further comprises an Ethernet switch. The at least two uplink ports and the at least one downlink ports of the connection device are connected to ports of this Ethernet switch. In this manner, the Ethernet switch of the connection device may serve as the de-coupling element. The failure of something connected to one port will not impede the operation of anything that is connected to the other ports.

Connecting end devices by APL provides some advantages over conventional twisted-pair Ethernet, such as being able to connect the end device using a single pair of wires, and bridging a longer distance between the redundant network switch and the end device.

In an advantageous embodiment the connection device is further configured to output an electrical voltage and/or power from the redundant network switch to the end device via the at least one downlink port. By this the connection device becomes a power supply module in a power over Ethernet setting.

In a possible embodiment in this context, the PHY-chip, e.g. 10BASE-T1L PHY may be implemented close to the port of the switching components, so that the connection device only needs to add the power supply aspect towards the connection to the end device.

In a particularly advantageous embodiment, at least one downlink port of the connection device is an Ethernet Advanced Physical Layer, APL, port, that is compliant with given requirements for intrinsic explosion safety. Requirements for "intrinsic safety" call for that only a certain maximum voltage, and/or a certain maximum electrical power, that is not sufficient for an ignition may be present on the end device. This limitation shall be set in hardware, so that it cannot be exceeded under any circumstances. Depending on the level of explosion protection needed in different plant areas, Ethernet-APL defines different port-classes with different power levels. Different power levels can be implemented in different variants of the connection device. Thus, there may be different connection devices with different hard-wired power limitations in use on one single redundant network switch to connect different end devices in different areas of an industrial plant. Typical APL switches have a fixed number of ports assigned to one or more port classes that correspond to different power consumption requirements and different explosion protection classes. For example, a switch with only 8 class A ports cannot support a port class B device. One and the same switch may have a fixed split between different port classes to allow for some flexibility, such as 4:4 between port classes A and B. But in practical applications, there will very often be one port too less of a specific port class. With the redundant network switch and connection device described here, the connection device may simply be swapped for a new one corresponding to a different port class, or upgraded to a different port class.

Alternatively, in a further particularly advantageous embodiment, the at least one downlink port is a Single Pair Ethernet, SPE, port. Such a port works in a manner similar to an APL port, with the important difference that the electrical voltage and/or power to be provided to the end device is negotiable between the end device and the connection device. This is in some way analogous to USB-C power delivery, where one single power supply can power a smartphone with 5 volts and 1 ampere, but can also power a notebook computer with 20 volts and 6 amperes. SPE must not be used if the end device is in a potentially explosive atmosphere because the limitation to the lower power is not enshrined in hardware. But for end devices that are not bound by this requirement, it is very convenient to have SPE. The modular combination of the redundant network switch on the one hand, and connection devices on the other hand, allows an arbitrary mix of end devices connected by APL with different fixed power levels, as well as end devices connected by SPE with auto-negotiated power levels. This makes the overall configuration of the network more flexible and reduces manual configuration work.

If the end devices rely on being powered through their network, rather than having power sources of their own, a power supply in the redundant network switch that is to provide power to the end devices is a further potential single point of failure. Even if all end devices still have, in principle, network connectivity, they may also go dead at the same time if they are all cut off from the power. Therefore, the redundant network switch may contain at least two independent power supplies for powering end devices. In a further particularly advantageous embodiment, the connection device is configured to draw electrical power evenly from at least two independent power supplies of the redundant network switch when all independent power supplies are operating normally. In case of failure of one or more independent power supplies, the connection device is configured to shift the power draw to the still operating one or more independent power supplies. In this manner, a failure of one independent power supply will no longer cause all connected end devices to stop working. What is still not redundant is the power limitation inside the connection device, as well as the power connection from the connection device to the end device. But if any of these components fail, this will affect only one end device at a time. In most use cases of a DCS, the temporary unavailability of one end device is tolerable, whereas unavailability of too many end devices at the same time needs to be avoided.

In a further particularly advantageous embodiment, the connection device further comprises an encoding that is indicative of the type of connection device, and/or of the electrical voltage and/or power that this connection device is capable of providing. In an advantageous embodiment this encoding is designed to be set when a specific type of connection device is placed for the first time. After this setting the connection device can only be replaced with connection devices of the same type, e.g. to avoid replacing connection devices with variants that are not compatible with the power class of the connected end device.

In a further particularly advantageous embodiment, this encoding is machine-readable by the network switch. In this manner, the redundant network switch, and any upstream network management, may be made aware of the concrete configuration of connection devices attached to the network switch. This configuration is usually assembled manually according to explosion protection requirements. The automatic reading of this configuration eliminates a source for error when keeping an overall inventory of the Ethernet network. For example, the configuration may be uploaded into a system engineering tool. The connection to such a system engineering tool can be based on a regular Ethernet management protocol (e.g. SNMP) but also on an Industrial Communication protocol, e.g. PROFINET, Ethernet IP, OPC UA. In case of usage of an Industrial Communication protocol also redundancy schemes of such a protocol can be used to increase the availability of access to management and diagnostics functions of the redundant network switch, e.g. by PROFINET R2 redundancy.

In a further particularly advantageous embodiment, circuitry configured to pass on electrical power from the redundant network switch to the end device via the at least one downlink port of the connection device is arranged in a module that is detachable from the at least one downlink port of the connection device. By modularizing the connection device further in this manner, the power output of the connection device may be switched to another power class without having to detach the wiring (e.g., a single-pair wiring) towards the end devices. Also, should the circuitry ever fail, it is more convenient to replace it.

As discussed above, a main use case of the redundant network switch and connection device is a DCS of an industrial plant where simultaneous non-availability of too many end devices at once must be avoided. The invention therefore also provides a distributed control system, DCS, for an industrial plant. The industrial plant comprises a plurality of sensors configured to capture measurement data and a plurality of actuators configured to exert physical action on an industrial process executed on the industrial plant. The DCS comprises:
- at least one controller configured to receive the measurement data from at least one sensor as input, generate control commands and transmit the control commands to at least one actuator, so as to cause this actor to exert said physical action;
- an Ethernet network configured to provide, to the at least one sensor and/or to the at least one actuator, communication with the at least one controller; and
- at least one redundant network switch described above that is connected to the Ethernet network, and at least one connection device described above connecting the at least one sensor, and/or the at least one actuator, to the redundant network switch.

As discussed above, this configuration of the DCS ensures that any failure in a component will not cause simultaneous disconnection of too many sensors or actuators. Therefore, the DCS as a whole will still remain functional.

### DESCRIPTION OF THE FIGURES

In the following, the invention will be illustrated using Figures without any intention to limit the scope of the invention. The Figures show:
Figure 1: Exemplary embodiment of the redundant network switch 2;
Figure 2: Exemplary embodiment of a connection device 9 assembled from multiple modules 9e;
Figure 3: Exemplary embodiment of a distributed control system 21 with redundant network switches 2.

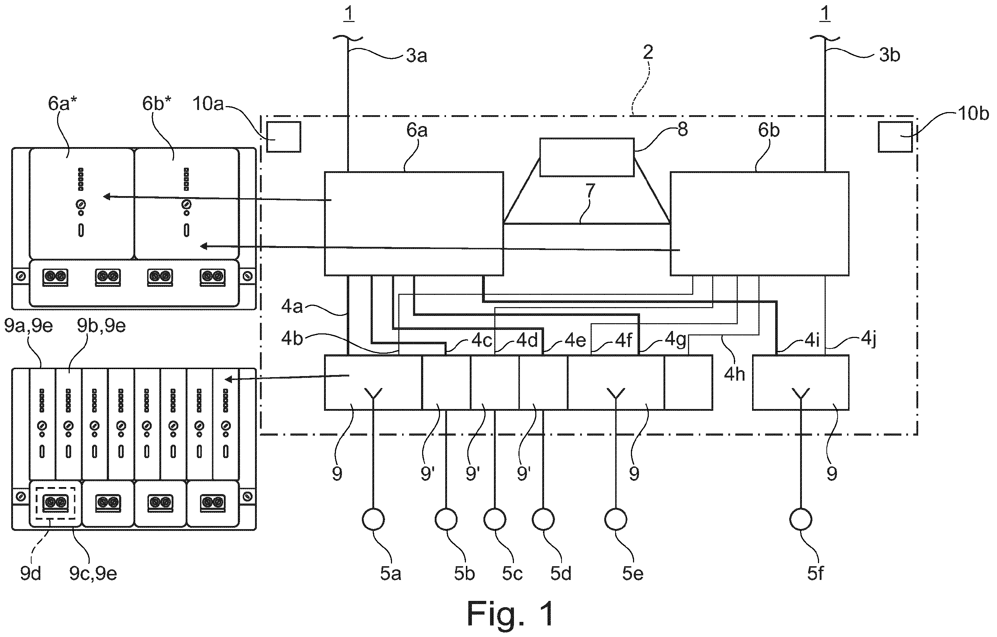

Figure 1 shows an exemplary embodiment of the redundant network switch 2. The redundant network switch 2 has two uplink ports 3a and 3b that are connectable to an Ethernet network 1. A first switching component (switching chip) 6a is connected to the first uplink port 3a, and a second switching component (switching chip) 6b is connected to the second uplink port 3b. The first switching component 6a and the second switching component 6b are interconnected by a redundancy link 7. The switching components 6a and 6b provide downlink ports 4a-4j. The downlink ports 4a-4j are connected to the switching components 6a and 6b in an alternating manner: Downlink ports 4a, 4c, 4e, 4g and 4i are connected to the first switching component 6a, whereas downlink ports 4b, 4d, 4f, 4h and 4j are connected to the second switching component 6b. Whenever one of the switching components 6a and 6b receives an Ethernet frame on any of its ports, it forwards this Ethernet frame to the port corresponding to the destination of this Ethernet frame, as per, e.g., a MAC address table.

End devices 5a-5f are connected to the downlink ports 4a-4j via connection devices 9 and 9'. Each connection device 9 connects to two adjacent downlink ports 4a-4j of the redundant network switch 2 (here: 4a, 4b; 4f, 4g; and 4i, 4j), one of which is connected to the first switching component 6a and one of which is connected to the second switching component 6b. In this manner, if the first switching component 6a or the second switching component 6b fails, end devices (here: 5a, 5e and 5f) connected to a connection device 9 that is in turn connected to two downlink ports 4a-4j of the redundant network switch 2 will still have connectivity to the Ethernet network 1 via the respective other switching component 6a, 6b. Connection devices 9' only connect to single downlink ports 4a-4j (here: 4c; 4d; 4e) of the redundant network switch 2, and thus to only one of the switching components 6a, 6b. End devices connected to these connection devices 9' (here: 5b, 5c, 5d) lose connectivity to the Ethernet network 1 if the respective switching component 6a, 6b to which they are connected fails.

The switching components 6a and 6b are arranged in respective modules 6a*, 6b* that are hot-swappable. That is, if one of these switching components 6a, 6b fails, the redundant network switch 2 may be restored to full working order quickly.

The connection device 9, 9' serves a double function. First, it may connect an end device 5a-5f redundantly to two downlink ports 4a-4j of the redundant network switch 2. Second, it may draw power from two independent power supplies 10a, 10b of the redundant network switch 2 and pass this power on to the respective connected end device 5a-5f. As discussed before, the connection device 9, 9' may also condition the power to meet explosion protection requirements in case of Ethernet-APL, to meet the PoDL power level in case of SPE, or to meet any other given requirements.

In Figure 1, it is shown how a connection device 9 may be built in a modular manner. The connection device 9 comprises two uplink ports 9a, 9b and a downlink port 9c. Each uplink port 9a, 9b of the connection device 9 is connected to one downlink port 4a-4j of the redundant network switch 2. In the example shown in Figure 1, a de-coupling element 9d ensures that Ethernet frames may travel between the downlink port 9c of the connection device 9 on the one hand, and the uplink ports 9a, 9b of the connection device 9 on the other hand, but there is no direct electrical connection between data lines of the uplink ports 9a, 9b. The uplink ports 9a and 9b of the connection device 9 that draw power from the power supplies 10a, 10b of the redundant network switch 2, as well as the downlink port 9c of the connection device 9 that forwards the power to the connected end device 5a-5g, are realized in separate modules 9e. In this manner, they can be easily exchanged. For example, if it is intended to switch an end device from APL to SPE with lesser limitations on the electrical power, or vice versa, the module 9e with the downlink port 9c may be changed to a new one. As an alternative, the de-coupling element 9d may also only be a passive terminal board, and the de-coupling may happen on another level, e.g., in the modules 9e themselves. Furthermore, it is possible to implement the connection device combining the two uplink ports 9a and 9b into the downlink port 9c in a monolithic fashion without the modularity as shown in the drawings. The motivation for this may, for example, be driven by manufacturing costs.

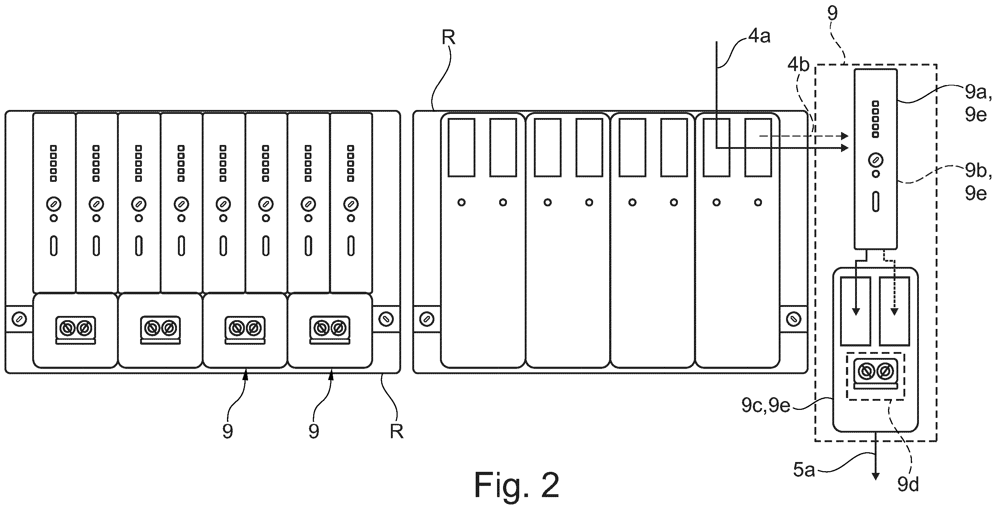

Figure 2 shows an example of the modular assembly of a connection device 9 in more detail. A rack R can accept modules 9e with downlink ports 9c of the connection device 9, as well as modules 9e with uplink ports 9a, 9b of the connection device 9. When the modules 9e are all inserted into one of the bays of the rack R, the uplink port 9a of the connection device 9 is connected to one downlink port (for example: 4a) of the redundant network switch 2, and the uplink port 9b of the connection device 9 is connected to an adjacent downlink port (for example: 4b) of the redundant network switch 2. In this example, traffic between each uplink port 9a, 9b and the downlink port 9c of the connection device 9 is forwarded by a de-coupling element 9d, here: in the module 9e that also houses the downlink port 9c of the connection device 9. An end device (here: 5a) is connected to the downlink port 9c of the connection device 9.

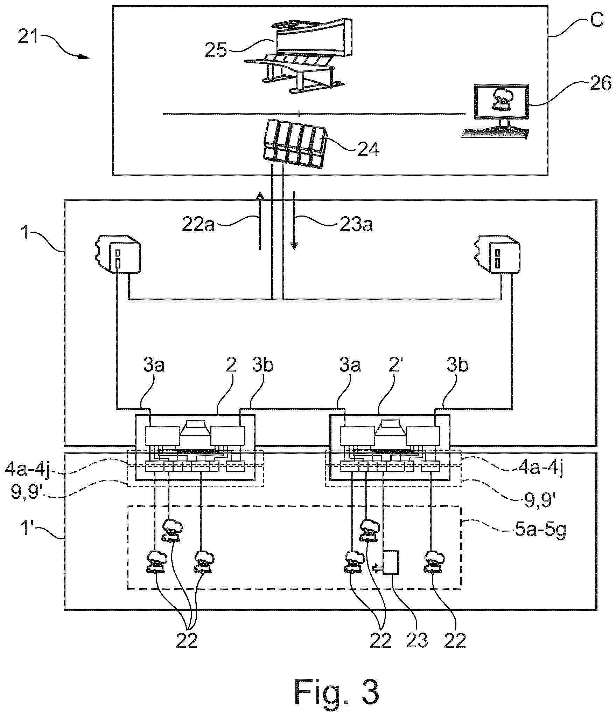

Figure 3 shows an exemplary embodiment of a distributed control system 21 for an industrial plant. The distributed control system 21 comprises a control level C, a backbone network 1, and an extension 1' of this backbone network 1 to sensors 22 and actuators 23 of the industrial plant as end devices 5a-5g. In the example shown in Figure 3, the control layer C comprises a control room 25, a human-machine interface 26, and at least one controller 24 that is to receive measurement data 22a from sensors 22 and send set-points and other control commands 23a to actuators 23.

To allow this communication, the end devices 5a-5g, 22, 23 are connected to the Ethernet network 1 using two redundant network switches 2, 2' of the kind described above. Both uplink ports 3a and 3b of each redundant network switch 2, 2' are connected to the Ethernet network 1, so that these redundant network switches 2, 2', together with other equipment, form a ring according to the Media Redundancy Protocol, MRP. As discussed above, it may be decided on a port-by-port basis whether any of the end devices 5a-5g connected to one of the redundant network switches 2, 2'
- has a redundant connection to the Ethernet network 1 that will remain intact even if a switching component 6a, 6b in the respective switch 2, 2' fails, or
- is less critical for the operation of the DCS 21, so that a non-redundant but more economic connection to the Ethernet network 1 suffices.

As discussed above, connections of the end devices 5a-5g to ports 4a-4j of the redundant network switches 2, 2' are set up via redundant connection devices 9 or non-redundant connection devices 9'.

### List of reference signs:

- 1: Ethernet network
- 1': extension of Ethernet network to end devices 5a-5g
- 2, 2': redundant network switch
- 3a, 3b: uplink ports of redundant network switch 2
- 4a-4j: downlink ports of redundant network switch 2
- 5a-5g: end devices, to be connected to Ethernet network 1
- 6a, 6b: switching components (switching chips) of network switch 2
- 6a*, 6b*: modules housing switching components 6a, 6b
- 7: redundancy link between switching components 6a, 6b
- 8: management entity of redundant network switch 2
- 9: redundant connection device
- 9': non-redundant connection device
- 9a, 9b: uplink ports of connection device 9, 9'
- 9c: downlink port of connection device 9, 9'
- 9d: de-coupling element of connection device 9, 9'
- 9e: modules of connection device 9, 9'
- 10a-10b: redundant power supplies of redundant network switch 2
- 21: distributed control system, DCS
- 22: sensors in DCS 21
- 22a: measurement values from sensors 22
- 23: actuators in DCS 21
- 23a: control commands to actuators 23
- 24: controller device
- 25: control room
- 26: human-machine interface
- C: control level of distributed control system 21
- R: rack for connection devices 9, 9'

## Claims

1. A redundant network switch (2) for an Ethernet network (1), comprising:
• at least a first uplink port (3a) and a second uplink port (3b) that are connectable to an Ethernet network (1);
• a plurality of downlink ports (4a-4j) that are connectable to end devices (5a-5g), so as to provide these end devices (5a-5g) with connectivity to the Ethernet network (1); and
• at least a first switching component (6a) connected at least to the first uplink port (3a) and a second switching component (6b) connected at least to the second uplink port (3b), wherein each downlink port (4a-4j) is connected to at least one of the first switching component (6a) and the second switching component (6b),
wherein each of the first switching component (6a) and the second switching component (6b) is configured to, upon receiving an Ethernet frame from an uplink port (3a, 3b) or from a downlink port (4a-4j), forward this Ethernet frame to an uplink port (3a, 3b) or downlink port (4a-4j) that leads towards the destination of this Ethernet frame.

2. The redundant network switch (2) of claim 1, further comprising a redundancy link (7) that interlinks the first switching component (6a) and the second switching component (6b).

3. The redundant network switch (2) of any one of claims 1 to 2, further comprising a management entity (8) that is connected to both the first switching component (6a) and the second switching component (6b).

4. The redundant network switch (2) of claim 3, wherein the management entity (8) is configured to suppress double forwarding of one and the same Ethernet frame by both the first switching component (6a) and the second switching component (6b).

5. The redundant network switch (2) of any one of claims 1 to 4, wherein at least a first downlink port (4a) connected to the first switching component (6a) is arranged side by side with at least a second downlink port (4b) connected to the second switching component (6b).

6. The redundant network switch (2) of any one of claims 1 to 5, wherein the first switching component (6a) and the second switching component (6b) are mounted in modules (6a*, 6b*) that are detachable from the redundant network switch (2), and the redundant network switch (2) is configured to allow replacing such modules (6a*, 6b*) during operation of the redundant network switch (2).

7. A connection device (9) for mediating a connection between the redundant network switch (2) of any one of claims 1 to 6 and at least one end device (5a-5g), comprising:
• at least one uplink port (9a, 9b) that is connectable to a downlink port (4a-4j) of the redundant network switch (2); and
• at least one downlink port (9c) that is connectable to the at least one end device (5a-5g).

8. The connection device (9) of claim 7, further configured to pass on electrical power from the redundant network switch (2) to the end device (5a-5g) via the at least one downlink port (9c).

9. The connection device (9) of any one of claims 7 to 8, comprising at least two uplink ports (9a, 9b) that are connectable to downlink ports (4a-4j) of the redundant network switch (2), and further comprising a de-coupling element (9d) that allows the passing and/or forwarding of Ethernet frames from the uplink ports (9a, 9b) to the downlink port (9c) and vice versa without creating a direct electrical connection between data contacts of the two uplink ports (9a, 9b).

10. The connection device (9) of claim 9, further comprising an Ethernet switch as de-coupling element (9d), wherein the at least two uplink ports (9a, 9b) and the at least one downlink port (9c) of the connection device (9) are connected to ports of this Ethernet switch.

11. The connection device (9) of any one of claims 7 to 10, wherein the at least one downlink port (9c) of the connection device (9) is an Ethernet Advanced Physical Layer, APL, port.

12. The connection device (9) of claim 11, further configured to output an electrical voltage and/or power that is compliant with given requirements for intrinsic explosion safety.

13. The connection device (9) of any one of claims 7 to 10, wherein the at least one downlink port (9c) is a Single Pair Ethernet, SPE, port.

14. The connection device (9) of claim 13, further configured to negotiate, with the end device (5a-5g), an electrical voltage and/or power to be provided to the end device (5a-5g).

15. The connection device (9) of any one of claims 7 to 14, further configured to:
• draw electrical power evenly from at least two independent power supplies (10a, 10b) of the redundant network switch (2) when all independent power supplies (10a, 10b) are operating normally; and
• in case of failure of one or more independent power supplies (10a, 10b), shift the power draw to the still operating one or more independent power supplies (10a, 10b).

16. The connection device (9) of any one of claims 7 to 15, further comprising an encoding that is
• indicative of the type of connection device (9), and/or of the electrical voltage and/or power that this connection device is capable of providing, and/or
• machine-readable by the redundant network switch (2).

17. The connection device (9) of any one of claims 7 to 16, wherein circuitry configured to pass on electrical power from the redundant network switch (2) to the end device (5a-5g) via the at least one downlink port (9c) of the connection device (9) is arranged in a module (9c*) that is detachable from the at least one downlink port (9c) of the connection device (9).

18. A distributed control system, DCS (21), for an industrial plant (20), the industrial plant (20) comprising a plurality of sensors (22) configured to capture measurement data and a plurality of actuators (23) configured to exert physical action on an industrial process executed on the industrial plant (20), the DCS (21) comprising:
• at least one controller (24) configured to receive the measurement data (22a) from at least one sensor (22) as input, generate control commands (23a) and transmit the control commands (23a) to at least one actuator (23), so as to cause this actuator (23) to exert said physical action;
• an Ethernet network (1) configured to provide, to the at least one sensor (22) and/or to the at least one actuator (23), communication with the at least one controller (24); and
• at least one redundant network switch (2) according to any one of claims 1 to 6 connected to the Ethernet network (1), and at least one connection device (9) according to any one of claims 7 to 17 connecting the at least one sensor (22), and/or the at least one actuator (23), to the redundant network switch (2).
